(19) Europäisches Patentamt
European Patent Office
Office européen des brevets

(11) Publication number: **0 494 537 A1**

(12) **EUROPEAN PATENT APPLICATION**

(21) Application number: **91311989.7**

(22) Date of filing: **23.12.91**

(51) Int. Cl.5: **C09B 67/48**, C09B 57/00, C07D 493/04

(30) Priority: **11.01.91 GB 9100653**

(43) Date of publication of application: **15.07.92 Bulletin 92/29**

(84) Designated Contracting States: **BE CH DE DK ES FR GB IT LI**

(71) Applicant: **IMPERIAL CHEMICAL INDUSTRIES PLC**
**Imperial Chemical House, Millbank**
**London SW1P 3JF(GB)**

(72) Inventor: **Howe, Graham**
**144 Hall Bower Lane**
**Newsome, Huddersfield HD4 6RN(GB)**
Inventor: **Bullock, James Franklin**
**75 Oxford Road**
**Macclesfield, Cheshire SK11 8JG(GB)**

(74) Representative: **Pugsley, Roger Graham et al**
**ICI Group Patents Services Dept. PO Box 6**
**Shire Park Bessemer Road**
**Welwyn Garden City Herts, AL7 1HD(GB)**

(54) **Polycyclic dye.**

(57) A polymorphic form of a dye of Formula (I):

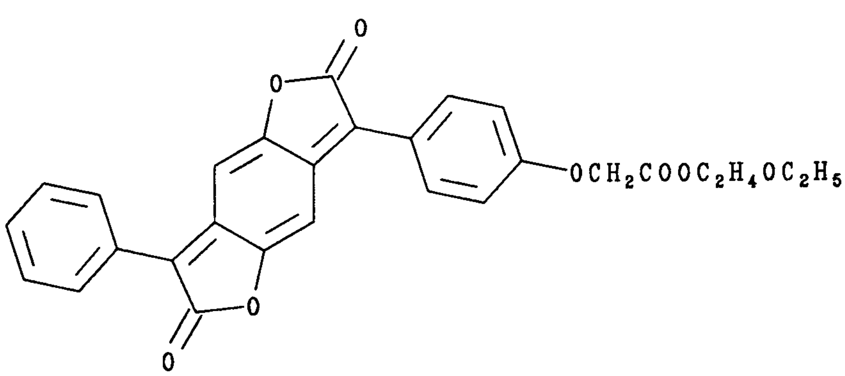

Formula I

characterised by the x-ray diffraction pattern shown as Form 2 in Figure 3 having characteristic peaks at the following values of two-theta (degrees) 3.8(s), 5.7(m), 7.6(m), 9.6(w), 11.5(w), 13.5(w), 15.5(w), 17.3(w), 19.2(w), 26.2(w) and a process for preparation of the polymorphic form.

EP 0 494 537 A1

This invention relates to a modified crystal form of a benzodifuranone (BDF) dye which shows improved package dyeing performance.

Benzodifuranone dyes are known for coloration of polyester fibres and produce bright shades with excellent wash and heat fastness properties.

Figure 1 is a differential scanning colorimetry (DSC) trace of Form 1 polymorph;

Figure 2 is a DSC trace of Form 2 polymorph; and

Figure 3 is an X-ray diffraction (XRD) pattern of Form 1 (lower pattern) polymorph and Form 2 (upper pattern) polymorph.

According to the invention there is provided a polymorphic form of a dye of Formula (I)

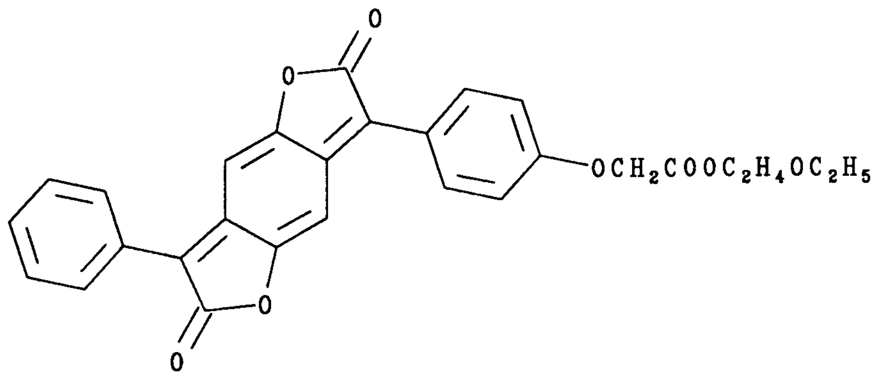

Formula I

characterised by the X-ray diffraction pattern shown as Form 2 in Figure 3 having characteristic peaks at the following values of two-theta (degrees): 3.8(s), 5.7(m), 7.6(m), 9.6(w), 11.5(w), 13.5(w), 15.5(w), 17.3(w), 19.2(w), 26.2(w).

The dye may be prepared by methods given in EP 0146269B and EP 0363034A exclusively in a polymorphic form, characterised by the X-ray diffraction pattern shown as Form 1 in Figure 3 having characteristic peaks at the following values of two-theta (degrees): 3.6(s), 6.7(w), 7.4(w), 8.5(w), 9.9(w), 16.0-(w), 17.9(w), 20.4(w), 26.3(m). The reference letters s, m and w above refer to the relative intensity of each two-theta peak where s is strong, m is medium and w is weak.

The dye in Form 1 may be converted into the dye in Form 2, by heating the dye in Form 1 at a temperature between 170°C and 250°C for a period from 1 to 24 hours.

The Form 2 polymorph is stable and does not revert to Form 1 on cooling or storage.

Form 1 and Form 2 polymorphs may be readily distinguished by differential scanning colorimetry (DSC). The DSC analysis of Form 1 shows two endothermic transitions (see Figure 1). The first endothermic transition at approximately 193°C represents the transformation of Form 1 to Form 2, the second endothermic transition at approximately 202°C represents the melting of Form 2.

The DSC analysis of Form 2 shows only one endothermic transition (see Figure 2) at approximately 202°C and this represents the melting of Form 2.

Form 1 and Form 2 polymorphs may also be distinguished by X-ray diffraction (XRD). The XRD patterns for Form 1 and Form 2 are shown in Figure 3.

The relative performances of the Form 1 and Form 2 polymorphs has been evaluated in package dyeing, in which a dispersion of the dye is circulated through a package of yarn, first in one direction then in the other. In this evaluation, Form 2 polymorph performs better than the Form 1 polymorph.

The Form 2 polymorph has also been compared with Form 1 during milling to reduce the particle size. The Form 2 mills to a particular particle size more quickly than Form 1.

The invention is illustrated by the following example:-

Example 1

3-Phenyl-7-[4-(2-ethoxyethoxycarbonylmethoxy)phenyl]-2,6-dioxo-2,6-dihydrobenzo[1:2-b, 4:5-b']difuran (50 parts) was heated at 190°C for $1\frac{1}{2}$ hours. The product was analysed by DSC and confirmed as the Form 2 polymorph.

XRD data was obtained using a Siemens XRD D500 Diffractometer with copper radiation for the Form 1 and Form 2 polymorphs.

| Form 1 | |
|---|---|
| Two-theta (degree) | Relative Intensity |
| 3.6 | Strong (s) |
| 6.7 | Weak (w) |
| 7.4 | Weak (w) |
| 8.5 | Weak (w) |
| 9.9 | Weak (w) |
| 16.0 | Weak (w) |
| 17.9 | Weak (w) |
| 20.4 | Weak (w) |
| 26.3 | Medium (m) |

| Form 2 | |
|---|---|
| Two-theta (degree) | Relative Intensity |
| 3.8 | Strong (s) |
| 5.7 | Medium (m) |
| 7.6 | Medium (m) |
| 9.6 | Weak (w) |
| 11.5 | Weak (w) |
| 13.5 | Weak (w) |
| 15.5 | Weak (w) |
| 17.3 | Weak (w) |
| 19.2 | Weak (w) |
| 26.2 | Weak (w) |

The above two-theta values may show some sample to sample variation due to the presence of different impurities at different concentrations produced during manufacture, typical variations in the two-theta values may be of the order of ±0.1 degree.

The performance of Form 2 was compared with that of Form 1 in package dyeing and the results are summarised in Table 1.

Table 1

| | 130 ° C | | | 140 ° C | | |
|---|---|---|---|---|---|---|
| | Rub Fastness | | Stain | Rub Fastness | | Stain |
| | Outer | Inner | | Outer | Inner | |
| Form 1 | 4-5 | 3 | S-H | 4-5 | 4 | L |
| Form 2 | 3-4 | 3-4 | Tr | 4-5 | 4 | Tr |

The package dyeing procedure involves winding polyester fabric onto a supporting sleeve followed by winding yarn on top of the polyester fabric. Dye solution is pumped through the sleeve in one direction and then in the opposite direction. The outer and inner in Table 1 refers to the position of the yarn on the sleeve. The stain refers to staining of the polyester fabric. The numerical values for outer and inner in Table 1 are a colorist's assessment of rub fastness performance and follow a geometric series thus for example a value of 4 is 2x better than a value of 3 and a value of 5 is 4x better than a value of 3. Thus the higher the numerical value the better the performance of the dye. In addition the evenness or levelling of the dye was assessed at a particular depth of shade and where the outer and inner rub fastness values are identical then the dye has given an even colouration throughout the wound yarn. The letters for Stain in Table 1 are again

a colourist's assessment and the following series expresses an increasing amount of stain i.e. Tr (trace) - L (little) - S (some) - H (heavy). Thus the less the stain the better the performance of the dye.

At 130 °C the dyestuff comprising the Form 2 polymorph has a higher value and thus a better rub fastness on the inner sleeve and significantly less staining on the sleeve itself than the dyestuff comprising the Form 1 polymorph. At similar depths of shade the Form 2 polymorph has equal rub fastness values on inner and outer sleeves and thus has produced a level dyeing of the yarn whereas the Form 1 polymorph has different rub fastness values on inner and outer sleeves and has produced an uneven dyeing. At 140 °C the dyestuff comprising the Form 2 polymorph stains the sleeve less than the dyestuff comprising the Form 1 polymorph.

Dyestuffs which comprise dyes such as BDF dyes are used as dispersions to colour synthetic materials such as polyester. These dispersions are prepared firstly by milling the dye to a particle size of <10 micron before adding formulating agents such as dispersants and stabilisers. It is important that the dyes used can be milled to suitable particle sizes as quickly as possible to help maximise plant throughput and to minimise energy requirements for milling.

Thus, the milling performance of Form 2 was compared with Form 1. Samples of Form 1 and Form 2 were milled for periods of up to 60 minutes and particle sizes were measured using a Fritsch laser diffraction particle size analyser. The results of other particle size analysis are summarised in Table 2.

Table 2

| | Milling time min | % particles | | | | |
|---|---|---|---|---|---|---|
| | | <8um | <5um | <3um | <1um | <0.5um |
| Form 1 | 60 | 99.1 | 96.9 | 91.5 | 62.2 | 38.1 |
| Form 1 | 60 | 98.5 | 96.0 | 90.3 | 61.5 | 38.1 |
| Form 1 (recrystallised) | 60 | 98.1 | 95.6 | 90.9 | 62.5 | 36.7 |
| Form 2 | 30 | 98.2 | 94.9 | 88.6 | 59.2 | 37.0 |

The data in Table 2 shows that when Form 1 and Form 2 are milled under the same conditions an almost identical particle size distribution is obtained for Form 2 in half the time it takes for Form 1.

**Claims**

**1.** A polymorphic form of a dye of Formula (I):

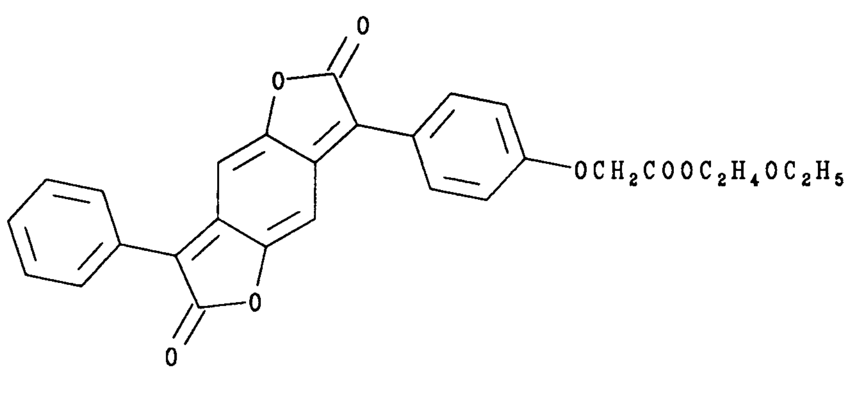

Formula I

characterised by the x-ray diffraction pattern shown as Form 2 in Figure 3 having characteristic peaks at the following values of two-theta (degrees) 3.8(s), 5.7(m), 7.6(m), 9.6(w), 11.5(w), 13.5(w), 15.5(w), 17.3(w), 19.2(w), 26.2(w).

**2.** A polymorphic form of a dye of Formula (I):

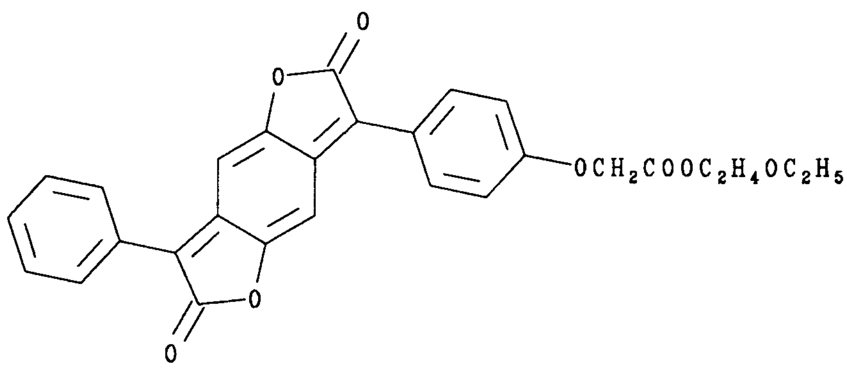

Formula I

characterised in that it has one endothermic transition as measured by DSC analysis at 202 °C.

**3.** A process for the preparation of a polymorphic form of a dye of Formula (I):

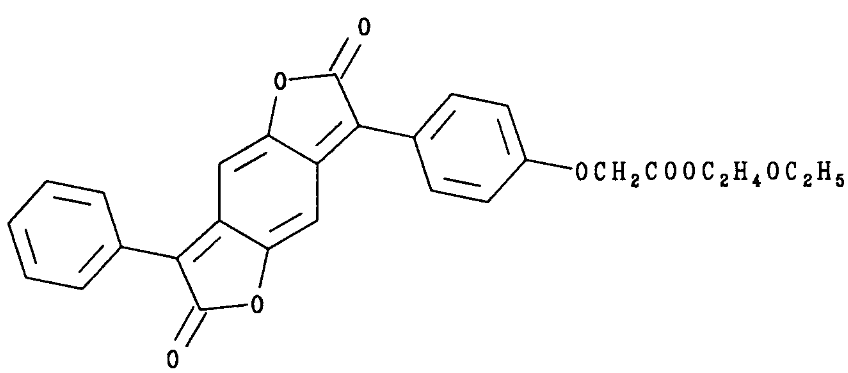

Formula I

by heating the dye in Form 1 at a temperature between 170 °C and 250 °C for a period from 1 to 24 hours.

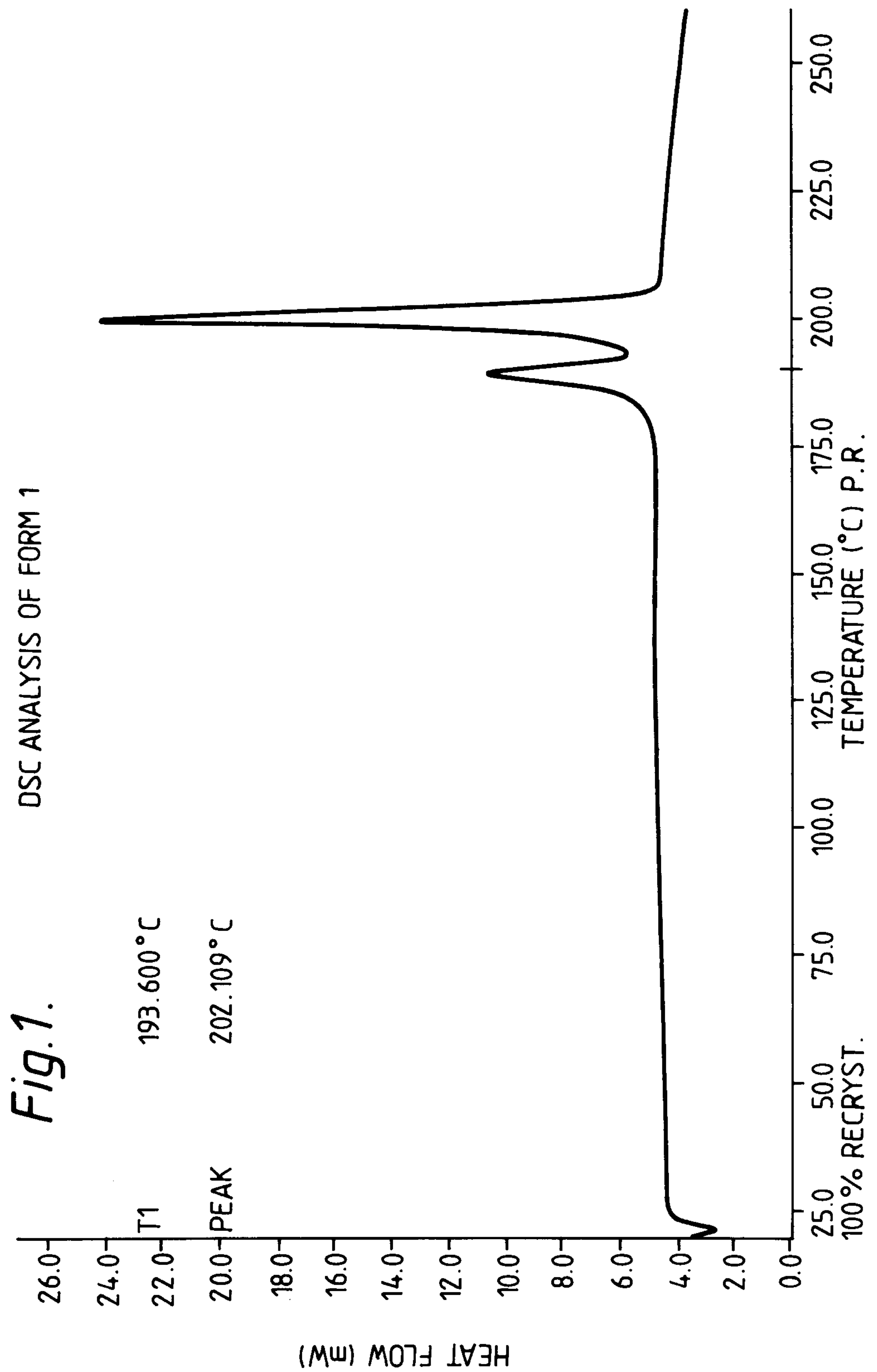
DSC ANALYSIS OF FORM 1
T1 193.600°C
PEAK 202.109°C
HEAT FLOW (mW)
0.0
2.0
4.0
6.0
8.0
10.0
12.0
14.0
16.0
18.0
20.0
22.0
24.0
26.0
25.0
50.0
75.0
100.0
125.0
150.0
175.0
200.0
225.0
250.0
TEMPERATURE (°C) P.R.
100% RECRYST.

Fig.1.

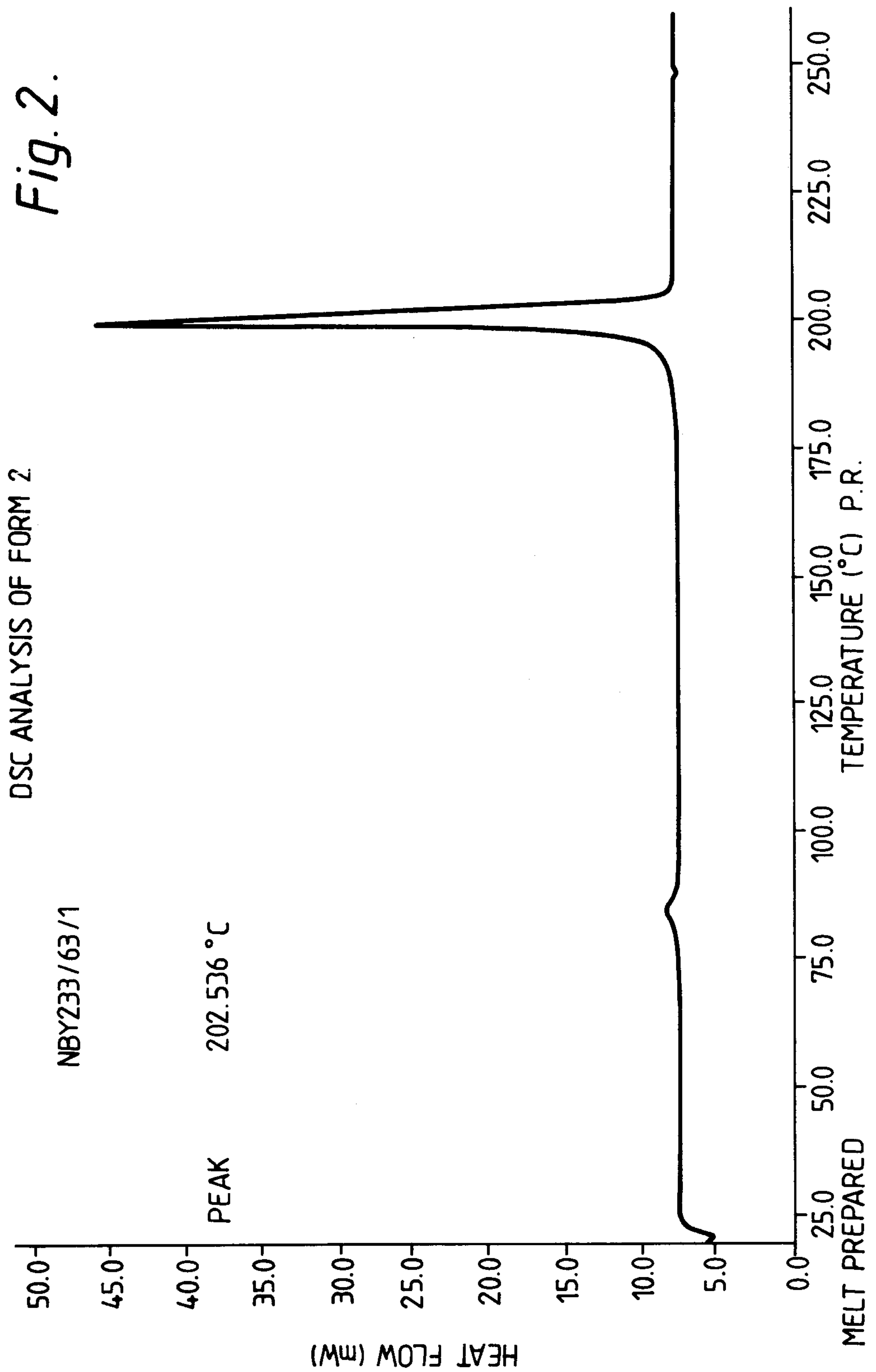
DSC ANALYSIS OF FORM 2
NBY233/63/1
PEAK
202.536 °C
HEAT FLOW (mW)
50.0
45.0
40.0
35.0
30.0
25.0
20.0
15.0
10.0
5.0
0.0
25.0
50.0
75.0
100.0
125.0
150.0
175.0
200.0
225.0
250.0
TEMPERATURE (°C) P.R.
MELT PREPARED

Fig. 2.

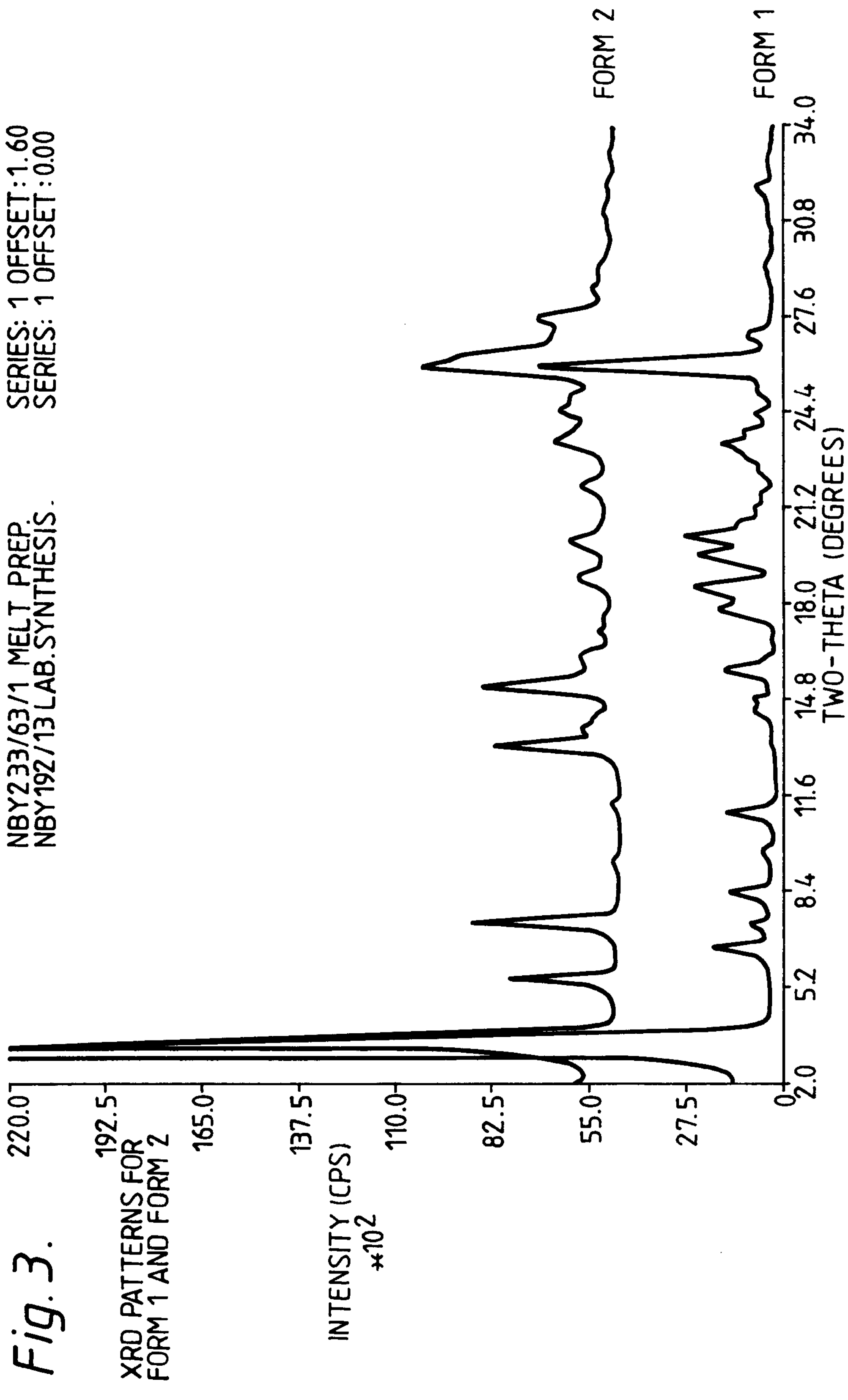
XRD PATTERNS FOR
FORM 1 AND FORM 2
INTENSITY (CPS)
*10²
NBY233/63/1 MELT PREP.
NBY192/13 LAB. SYNTHESIS.
SERIES: 1 OFFSET: 1.60
SERIES: 1 OFFSET: 0.00
FORM 2
FORM 1
220.0
192.5
165.0
137.5
110.0
82.5
55.0
27.5
0
2.0
5.2
8.4
11.6
14.8
18.0
21.2
24.4
27.6
30.8
34.0
TWO-THETA (DEGREES)

Fig. 3.

European Patent Office

# EUROPEAN SEARCH REPORT

Application Number

EP 91311989.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP - A - 0 363 034 (IMPERIAL CHEMICAL INDUSTRIES PLC) * Claim 1 * -- | 1 | C 09 B 67/48<br>C 09 B 57/00<br>C 07 D 493/04 |
| D,A | EP - A - 0 146 269 (IMPERIAL CHEMICAL INDUSTRIES PLC) * Claim 1 * ---- | 1 | |

TECHNICAL FIELDS SEARCHED (Int. Cl.5)

C 09 B
C 07 D 493/00

The present search report has been drawn up for all claims

| Place of search | Date of completion of the search | Examiner |
|---|---|---|
| VIENNA | 01-04-1992 | HAUSWIRTH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)